# EUROPEAN PATENT APPLICATION

(11) **EP 4 037 415 A1**
(43) Date of publication of application: **03.08.2022**
(21) Application number: 20867082.8
(22) Date of filing: 27.09.2020
(51) Int. Cl.: H04W 74/08, H04W 24/10

(54) **INFORMATION REPORTING AND RECEIVING METHODS, APPARATUS, TERMINAL, SERVICE NODE, AND STORAGE MEDIUM**

(30) Priority: 27.09.2019 CN 201910927938
(71) Applicant: ZTE Corporation, Shenzhen, Guangdong 518057 (CN)
(72) Inventor: HU, Linxi, Shenzhen, Guangdong 518057 (CN); ZHANG, Nan, Shenzhen, Guangdong 518057 (CN); CAO, Wei, Shenzhen, Guangdong 518057 (CN); DOU, Jianwu, Shenzhen, Guangdong 518057 (CN); YANG, Zhen, Shenzhen, Guangdong 518057 (CN)
(74) Representative: Ricker, Mathias
(86) International application number: PCT/CN2020/118161
(87) International publication number: WO 2021/057980

(57) **Abstract**

Provided are an information reporting method and information receiving method, apparatus, a terminal, a service node, and a storage medium. The information reporting method includes receiving indication information under a random access mechanism and reporting channel state information according to the indication information.

## Description

The present application claims priority to Chinese Patent Application No. 201910927938.0 filed with the China National Intellectual Property Administration (CNIPA) on Sep. 27, 2019, the disclosure of which is incorporated herein by reference in its entirety.

### TECHNICAL FIELD

The present application relates to wireless communication networks, for example, an information reporting method and apparatus, an information receiving method and apparatus, a terminal, a service node, and a storage medium.

### BACKGROUND

In a wireless communication process, the channel state is ever-changing and has a relatively great effect on wireless signals. For example, the quality of a channel can determine the modulation manner of the signals of both sides in the communication and may also affect the contention result during the contention process of establishing a communication. In an application scenario of a non-terrestrial network (NTN), a satellite base station is very far from a ground terminal, resulting in a relatively large transmission delay. For the satellite base station in low Earth orbiting (LEO), the high movement speed may also cause the frequent handoff of terminal access. The lack of an effective information reporting or receiving method in new radio (NR) protocols makes a random access mechanism unable to adapt to a change in channels, greatly reducing the performance of random access in a large-delay and multiple-handoff scenario and resulting in poor reliability.

### SUMMARY

The present application provides an information reporting method and apparatus, an information receiving method and apparatus, a terminal, a service node, and a storage medium so that a change in the channel state is considered by reporting channel state information (CSI) in a random access mechanism, improving the reliability of random access.

Embodiments of the present application provide an information reporting method. The method is applied to a terminal and includes the following.

Indication information under a random access mechanism is received.

Channel state information is reported according to the indication information.

Embodiments of the present application further provide an information receiving method. The method includes the following.

Indication information under a random access mechanism is sent.

The channel state information reported by a terminal according to the indication information is received.

Embodiments of the present application further provide an information reporting apparatus. The apparatus includes an indication information receiving module and a state information reporting module.

The indication information receiving module is configured to receive indication information under a random access mechanism.

The state information reporting module is configured to report channel state information according to the indication information.

Embodiments of the present application further provide an information receiving apparatus. The apparatus includes an indication information sending module and a state information receiving module.

The indication information sending module is configured to send indication information under a random access mechanism.

The state information receiving module is configured to receive the channel state information reported by a terminal according to the indication information.

Embodiments of the present application further provide a terminal. The terminal includes one or more processors and a storage apparatus configured to store one or more programs.

When executed by the one or more processors, the one or more programs cause the one or more processors to perform the preceding information reporting method.

Embodiments of the present application further provide a service node. The service node includes one or more processors and a storage apparatus configured to store one or more programs. When executed by the one or more processors, the one or more programs cause the one or more processors to perform the preceding information receiving method.

Embodiments of the present application further provide a computer-readable storage medium for storing a computer program which, when executed by a processor, causes the processor to perform the preceding information reporting method or information receiving method.

### BRIEF DESCRIPTION OF DRAWINGS

FIG. 1 is a flowchart of an information reporting method according to an embodiment.
FIG. 2 is a diagram of a first-type random access mechanism according to an embodiment.
FIG. 3 is a diagram of a second-type random access mechanism according to an embodiment.
FIG. 4 is a flowchart of an information receiving method according to an embodiment.
FIG. 5 is a diagram illustrating the structure of an information reporting apparatus according to an embodiment.
FIG. 6 is a diagram illustrating the structure of an information receiving apparatus according to an embodiment.
FIG. 7 is a diagram illustrating the structure of a terminal according to an embodiment.
FIG. 8 is a diagram illustrating the structure of a service node according to an embodiment.

### DETAILED DESCRIPTION

The present application is described hereinafter in conjunction with drawings and embodiments. The embodiments described herein are merely intended to explain and not to limit the present application. Besides, for ease of description, only part, not all, of structures related to the present application are illustrated in the drawings.

In an NTN and multiple-handoff scenario, a satellite base station is very far from a ground terminal, resulting in a large transmission delay. For the satellite base station in LEO, the movement speed up to 7.5 km/s may also cause the frequent handoff of a terminal. The excessively large delay results in a long duration of a random access process and a great effect generated by a change in channels. The frequent handoff results in frequent random access processes. In NR protocols, a CSI reporting mechanism is not added to a random access process. When a service node makes a decision of contention resolution, the transmission performance in the random access process is greatly damaged due to the lack of consideration of channel state information, failing to adapt to the change in channels.

For this embodiment, the CSI reporting mechanism is introduced for random access. The terminal reports the CSI to the service node. According to the CSI reported by the terminal, the service node can select the optimal access terminal among terminals in contention or determine a modulation manner, thus better adapting to a change in wireless channels and improving the performance of random access.

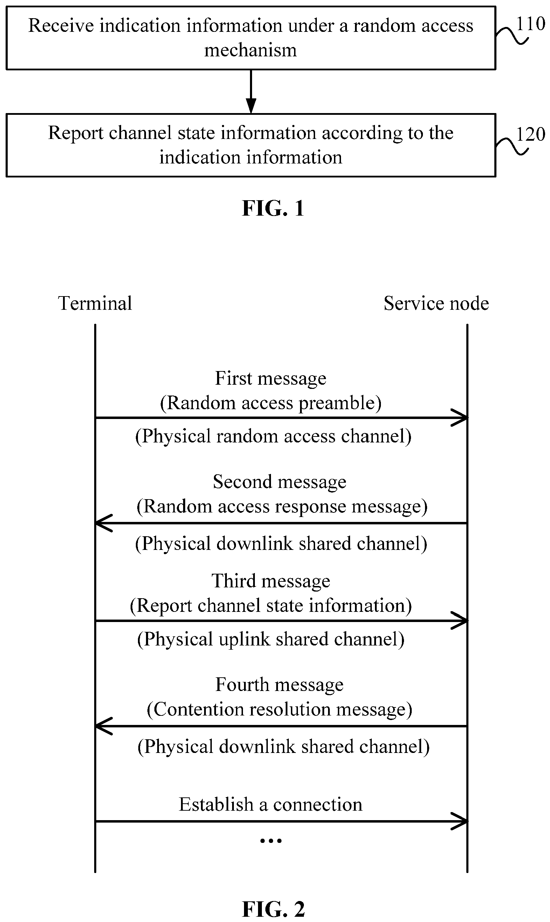

FIG. 1 is a flowchart of an information reporting method according to an embodiment. The information reporting method provided in this embodiment may be applied to a terminal. As shown in FIG. 1, the method includes S110 and S120.

In S 110, indication information under a random access mechanism is received.

In an embodiment, the terminal receives the indication information sent by a service node in the random access mechanism. Through a random access response (RAR) message or a downlink broadcast message, the service node may indicate that the terminal reports CSI. In an embodiment, the indication information may be further used for, for example, indicating a parameter of the CSI reported by the terminal and calculating reference signals to be measured by the CSI.

In S120, the channel state information is reported according to the indication information.

In an embodiment, according to the indication information, the terminal obtains the corresponding channel state information by measuring the reference signals and reports the channel state information to the service node. For example, the indication information may indicate that the terminal measures synchronization signal/physical broadcast channel blocks (SSBs) and reports the received power of the optimal reference signal. In this case, when receiving the indication information, the terminal measures the SSBs, determines the received power of the optimal SSB, takes the received power of the optimal SSB as the CSI, and reports the received power of the optimal SSB to the service node. In another example, the indication information may indicate that the terminal measures channel state information reference signals (CSI-RSs) and reports the channel quality indicator (CQI) of the optimal CSI-RS. In this case, when receiving the indication information, the terminal measures the CSI-RSs, determines the CQI of the optimal CSI-RS, takes the CQI of the optimal CSI-RS as the CSI, and reports the CQI of the optimal CSI-RS to the service node. On this basis, the service node can make a random access decision according to the CSI reported by the terminal and send a contention resolution message to the terminal.

In an embodiment, the resource position of the CSI reported by the terminal corresponds to the identifier (ID) of the terminal. In the case where the terminal receives and measures downlink reference signals of multiple base stations, the resource position further corresponds to the ID of a cell.

In an embodiment, the parameter of the reported CSI may be arranged according to an actual situation. For example, the arrangement may be performed according to, for example, high-layer parameter configuration and the number of antenna ports. For example, the indication information may include the indication information of a CQI and is used for indicating that the terminal reports a broadband CQI or a sub-band CQI. In another example, the indication information may include the indication information of a precoding matrix indicator (PMI) and is used for indicating that the terminal reports a broadband PMI or a sub-band PMI in the case of more than one antenna port; in the case where a sub-band PMI is reported and in the case where the number of ports is not two, the indication information is also used for indicating that the terminal reports one broadband PMI (il) and each sub-band reports one sub-band PMI (i2); in the case of two ports, the indication information is also used for indicating that each sub-band of the terminal reports one sub-sand PMI; and in the case where a PMI is reported, the indication information is also used for indicating that the terminal reports a layer indication (LI) to indicate, for example, the column corresponding to the strongest layer of codewords in a precoding matrix. Each preceding CQI, PMI, LI, or the like is taken as the CSI in reporting so as to help the service node make a decision.

In an embodiment, the indication information is used for indicating that the terminal reports the channel state information through a third message of a first-type random access mechanism. Alternatively, the indication information is used for indicating that the terminal reports the channel state information through an A-type message of a second-type random access mechanism.

In an embodiment, in the case of the first-type random access mechanism, the indication information is a random access response (RAR) message or a downlink broadcast message. In the case of the second-type random access mechanism, the indication information is the downlink broadcast message.

FIG. 2 is a diagram of a first-type random access mechanism according to an embodiment. As shown in FIG. 2, in the first-type random access mechanism, the following is included before the terminal establishes a connection with the service node.
1) The terminal sends a first message (referred to as message 1 (msgl)) to the service node. Msgl includes a random access preamble used for initiating a contention access request to the service node. A contention relationship exists among terminals with the same random access preamble.
2) After receiving msgl, the service node sends a second message (referred to as message2 (msg2)) to the terminal. Msg2 is the RAR message used for responding to the contention access request initiated by the terminal.
3) The terminal sends a third message (referred to as message3 (msg3)) to the service node. Msg3 is used for reporting the CSI according to the indication information of the service node. The indication information may be the RAR message or the downlink broadcast message. The downlink broadcast message is sent by the service node to the terminal before 1).
4) The service node sends a fourth message to the terminal. The fourth message includes the contention resolution message representing the contention resolution solution made by the service node based on the CSI.

In the scenario of the first-type random access mechanism, the indication information is used for indicating that the terminal reports the CSI through msg3.

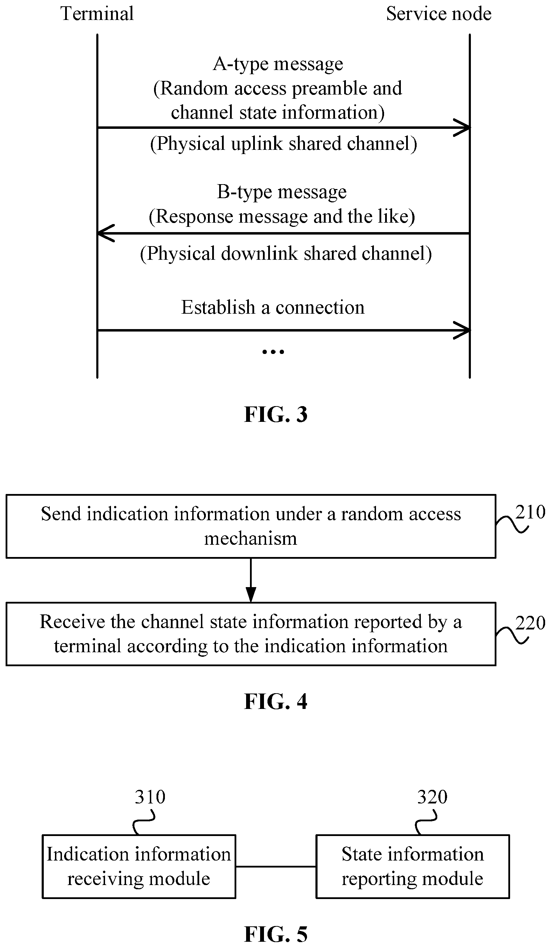

FIG. 3 is a diagram of a second-type random access mechanism according to an embodiment. As shown in FIG. 3, in the second-type random access mechanism, the following is included before the terminal establishes a connection with the service node.
1) The terminal sends an A-type message (referred to as messageA (msgA)) to the service node according to the indication information, thus initiates the contention access request, and reports the CSI. MsgA includes the random access preamble and the CSI. The indication information is the downlink broadcast message. The downlink broadcast message is sent by the service node to the terminal before 1).
2) After receiving msgA, the service node sends a B-type message (referred to as messageB (msgB)) to the terminal, thus responds to the contention access request initiated by the terminal, and indicates the contention resolution solution according to the CSI. MsgB includes the RAR message and the contention resolution message.

In the scenario of the second-type random access mechanism, the indication information is used for indicating that the terminal reports the CSI through msgA.

In an embodiment, the indication information includes at least one of the first indication information used for indicating a parameter included in the channel state information reported by the terminal, the second indication information used for indicating reference signals to be measured when the terminal calculates the channel state information, and the third indication information used for indicating a reporting operation performed by the terminal to the channel state information. The reporting operation includes to report and not to report.

In this embodiment, the first indication information may be used for indicating the parameter included in the CSI reported by the terminal, for example, the index of the optimal reference signal, the reference signal received power (RSRP) of the optimal reference signal, the CQI of the optimal reference signal, the PMI of the optimal reference signal, and the rank indicator (RI) of the optimal reference signal. The second indication information may be used for indicating that the terminal calculates the CSI by measuring the SSBs or the CSI-RSs. The third indication information is used for indicating whether the terminal needs to report the CSI.

In an embodiment, in the case where the indication information does not include one item of information, the corresponding indication content may be determined according to a preset rule. For example, in the case where the indication information does not include the first indication information, which parameters to be included in the reported CSI is indicated between the terminal and the service node through pre-agreement, through a protocol provision, or through the notification by another signaling. The terminal reports these parameters in the process of reporting the CSI.

In an embodiment, in the case where the indication information does not include the second indication information and in the case of the first-type random access mechanism, the reference signals to be measured when the terminal calculates the CSI are reference signals corresponding to a resource occupied by the first message of the first-type random access mechanism. Alternatively, in the case where the indication information does not include the second indication information and in the case of the second-type random access mechanism, the reference signals to be measured when the terminal calculates the CSI are reference signals corresponding to resources occupied by the A-type message of the second-type random access mechanism. The reference signals include at least one of the SSBs or the CSI-RSs.

In this embodiment, as for the first-type random access mechanism, in the case where the indication information does not include the second indication information, the terminal obtains the CSI by measuring the reference signals corresponding to the resource occupied by the first message. The resource occupied by the first message is a physical random access channel (PRACH). As for the second-type random access mechanism, in the case where the indication information does not include the second indication information, the terminal obtains the CSI by measuring the reference signals corresponding to the resources occupied by the A-type message. The resources occupied by the A-type message are the PRACH and a physical uplink shared channel (PUSCH).

In an embodiment, the channel state information is obtained by measuring the reference signals. The reference signals include at least one of the SSBs or the CSI-RSs.

In an embodiment, the parameter of the channel state information includes at least one of the index of the optimal reference signal, the RSRP of the optimal reference signal, the CQI of the optimal reference signal, the RI of the optimal reference signal, or the PMI of the optimal reference signal.

In an embodiment, the parameter of the channel state information includes the index of the optimal reference signal. Alternatively, in the case where the index of the optimal reference signal is consistent with the index of a reference signal corresponding to a resource that is occupied by the first message of the first-type random access mechanism or the A-type message of the second-type random access mechanism, the parameter of the channel state information does not include the index of the optimal reference signal, where the reference signal corresponding to the resource is used for transmitting the first message of the first-type random access mechanism or the A-type message of the second-type random access mechanism. In the case where the index of the optimal reference signal is inconsistent with the index of the reference signal corresponding to a resource that is occupied by the first message of the first-type random access mechanism or the A-type message of the second-type random access mechanism, the parameter of the channel state information includes the index of the optimal reference signal, where the reference signal corresponding to the resource is used for transmitting the first message of the first-type random access mechanism or the A-type message of the second-type random access mechanism.

In an embodiment, in the case of one reference signal antenna port, the parameter of the channel state information does not include the PMI or the RI. Alternatively, in the case of more than one reference signal antenna port, the parameter of the channel state information includes at least one of the index of the optimal reference signal, the reference signal received power (RSRP) of the optimal reference signal, the channel quality indicator (CQI) of the optimal reference signal, the rank indicator (RI) of the optimal reference signal, or the precoding matrix indicator (PMI) of the optimal reference signal.

In this embodiment, in the case of one reference signal antenna port, it is unnecessary to distinguish a rank from a precoding matrix. Accordingly, the parameter of the reported CSI may not include the PMI or the RI, but includes at least one of the index of the optimal reference signal, the RSRP of the optimal reference signal, or the CQI of the optimal reference signal. Alternatively, in the case of more than one reference signal antenna port, the parameter of the CSI includes at least one of the index of the optimal reference signal, the RSRP of the optimal reference signal, the CQI of the optimal reference signal, the RI of the optimal reference signal, or the PMI of the optimal reference signal.

In an embodiment, the optimal reference signal is the reference signal with the largest measurement power or the reference signal with the largest CQI.

In this embodiment, the reference signals may be the SSBs and the CSI-RSs. The reference signals are measured. The reference signal with the largest received power is taken as the optimal reference signal. Alternatively, the reference signal with the largest CQI is taken as the optimal reference signal. Moreover, the CSI of the optimal reference signal is reported. The CSI may include at least one of the index of the optimal reference signal, the RSRP of the optimal reference signal, the CQI of the optimal reference signal, the RI of the optimal reference signal, or the PMI of the optimal reference signal.

In an embodiment, after reporting the channel state information according to the indication information, the method further includes receiving the contention resolution message generated by the service node according to the channel state information and, in the case where the terminal ID in the contention resolution message is consistent with the ID of the terminal reporting the CSI, establishing a connection with the service node.

For example, in an embodiment, the random access is initial random access. The indication information is the downlink broadcast signal used for indicating that the terminal reports the CSI through msg3 of the first-type random access mechanism. The parameter of the reported CSI includes the index of the optimal SSB and the RSRP of the optimal SSB. Moreover, the RSRP is obtained by measuring the SSBs.

In this embodiment, after receiving the downlink broadcast signal, the terminal searches in downlink SSB beams for a beam whose received power exceeds the preset threshold. It is supposed that a total of K downlink SSB beams (referred to as B₁, ..., B_{K}) exist and that the searched beam whose received power exceeds the preset threshold is B₁. In this case, the terminal sends msg1 in the uplink beam corresponding to B₁. Msgl includes the random access preamble. After receiving msg1, the service node sends the RAR message in a physical downlink shared channel (PDSCH). After receiving the RAR message, the terminal measures all the downlink SSB beams according to the indication of the downlink broadcast signal, determines to receive the SSB beam (referred to as B_{K}) with the largest received power, and reports the CSI through sending msg3 to the service node. Whether the SSB beam (B_{K}) with the largest received power is consistent with the SSB beam (Bi) corresponding to the resource occupied by sending msg1 or not, the parameter of the reported CSI includes the index of the optimal SSB and the RSRP of the optimal SSB. After receiving msg3, the service node makes a decision based on the CSI reported by the terminal and sends the contention resolution message (that is, message4 (msg4)). After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the random access is initial random access. The indication information is the downlink broadcast signal used for indicating that the terminal reports the CSI through msg3 of the first-type random access mechanism. The parameter of the reported CSI includes the index of the optimal SSB and the RSRP of the optimal SSB or includes only the RSRP of the optimal SSB. Moreover, the RSRP is obtained by measuring the SSBs.

In this embodiment, after receiving the downlink broadcast signal, the terminal searches in downlink SSB beams for a beam whose received power exceeds the preset threshold. It is supposed that a total of K downlink SSB beams (referred to as B₁, ..., B_{K}) exist and that the searched beam whose received power exceeds the preset threshold is B₁. In this case, the terminal sends msg1 in the uplink beam corresponding to B₁. Msgl includes the random access preamble. After receiving msg1, the service node sends the RAR message in the PDSCH. After receiving the RAR message, the terminal measures all the downlink SSB beams according to the indication of the downlink broadcast signal, determines to receive the SSB beam (referred to as B_{K}) with the largest received power, and reports the CSI through sending msg3 to the service node. In the preceding case where B_{K} is consistent with B₁ (that is, k = 1), the reported CSI may include only the RSRP of B_{K} and does not include the index of B_{K}, indicating that B₁ is the optimal SSB with the largest received power. In the preceding case where B_{K} is inconsistent with B₁ (that is, *k* ∈ {1,2,..*.*,*K*},*k* ≠ 1), the reported CSI may include the index of B_{K} and the RSRP of B_{K}. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the random access is initial random access. The indication information is the RAR message used for indicating that the terminal reports the CSI through msg3 of the first-type random access mechanism. The parameter of the reported CSI includes the RSRP of the optimal SSB. Moreover, the RSRP is obtained by measuring the SSBs.

In this embodiment, after receiving the downlink broadcast signal, the terminal searches in downlink SSB beams for a beam whose received power exceeds the preset threshold. It is supposed that a total of K downlink SSB beams (referred to as B₁, ..., B_{K}) exist and that the searched beam whose received power exceeds the preset threshold is B₁. In this case, the terminal sends msg1 in the uplink beam corresponding to B₁. Msgl includes the random access preamble. After receiving msg1, the service node sends the RAR message in the PDSCH. After receiving the RAR message, the terminal measures all the downlink SSB beams according to the indication of the RAR message, determines to receive the SSB beam (referred to as B_{K}) with the largest received power, and reports the CSI through sending msg3 to the service node. Whether the SSB beam (B_{K}) with the largest received power is consistent with the SSB beam (B₁) corresponding to the resource occupied by sending msg1 or not, the parameter of the reported CSI includes the index of the optimal SSB and the RSRP of the optimal SSB. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the random access is initial random access. The indication information is the RAR message used for indicating that the terminal reports the CSI through msg3 of the first-type random access mechanism. The parameter of the reported CSI includes the index of the optimal SSB and the RSRP of the optimal SSB or includes only the RSRP of the optimal SSB. Moreover, the RSRP is obtained by measuring the SSBs.

In this embodiment, after receiving the downlink broadcast signal, the terminal searches in downlink SSB beams for a beam whose received power exceeds the preset threshold. It is supposed that a total of K downlink SSB beams (referred to as B₁, ..., B_{K}) exist and that the searched beam whose received power exceeds the preset threshold is B₁. In this case, the terminal sends msg1 in the uplink beam corresponding to B₁. Msgl includes the random access preamble. After receiving msg1, the service node sends the RAR message in the PDSCH. After receiving the RAR message, the terminal measures all the downlink SSB beams according to the indication of the RAR message, determines to receive the SSB beam (referred to as B_{K}) with the largest received power, and reports the CSI through sending msg3 to the service node. In the preceding case where B_{K} is consistent with B₁ (that is, k = 1), the reported CSI may include only the RSRP of B_{K} and does not include the index of B_{K}, indicating that B₁ is the optimal SSB with the largest received power. In the preceding case where B_{K} is inconsistent with B₁ (that is, *k* ∈ {1,2,*...*,*K*},*k* ≠ 1), the reported CSI may include the index of B_{K} and the RSRP of B_{K}. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the random access is non-initial random access. The indication information is a downlink broadcast signal used for indicating that the terminal reports the CSI through msg3 of the first-type random access mechanism. The parameter of the reported CSI includes the index of the optimal SSB or the index of the optimal CSI-RS (the index of the optimal CSI-RS is also referred to as the CSI-RS resource indicator (CRI)) and further includes the RSRP of the optimal SSB or the RSRP of the optimal CSI-RS. Moreover, the RSRP is obtained by measuring the SSBs or the CSI-RSs.

In this embodiment, after receiving the downlink broadcast signal, the terminal searches in reference signal beams (SSB beams or CSI-RS beams) for a beam whose received power exceeds the preset threshold. It is supposed that a total of K reference signal beams (referred to as B₁, ..., B_{K}) exist and that the searched beam whose received power exceeds the preset threshold is B₁. In this case, the terminal sends msg1 in the uplink beam corresponding to B₁. Msgl includes the random access preamble. After receiving msg1, the service node sends the RAR message in the PDSCH. After receiving the RAR message, the terminal measures all the downlink SSB beams according to the indication of the downlink broadcast signal, determines to receive the reference signal beam (referred to as B_{K}) with the largest received power, and reports the CSI through sending msg3 to the service node. Whether B_{K} is consistent with B₁ or not, the parameter of the reported CSI includes the index of the optimal reference signal and the RSRP of the optimal reference signal. When the RSRP is obtained by measuring the SSBs, the index of the optimal reference signal is the index of the optimal SSB. When the RSRP is obtained by measuring the CSI-RSs, the index of the optimal reference signal is the CRI. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the random access is non-initial random access. The indication information is the downlink broadcast signal used for indicating that the terminal reports the CSI through msg3 of the first-type random access mechanism. The parameter of the reported CSI includes the RSRP of the optimal SSB or the RSRP of the optimal CSI-RS and may further include the index of the optimal SSB or the index of the optimal CSI-RS (the index of the optimal CSI-RS is also referred to as the CSI-RS resource indicator (CRI)). Moreover, the RSRP is obtained by measuring the SSBs or the CSI-RSs.

In this embodiment, after receiving the downlink broadcast signal, the terminal searches in reference signal beams (SSB beams or CSI-RS beams) for a beam whose received power exceeds the preset threshold. It is supposed that a total of K reference signal beams (referred to as B₁, ..., B_{K}) exist and that the searched beam whose received power exceeds the preset threshold is B₁. In this case, the terminal sends msg1 in the uplink beam corresponding to B₁. Msgl includes the random access preamble. After receiving msg1, the service node sends the RAR message in the PDSCH. After receiving the RAR message, the terminal measures all the downlink SSB beams according to the indication of the downlink broadcast signal, determines to receive the reference signal beam (referred to as B_{K}) with the largest received power, and reports the CSI through sending msg3 to the service node. In the preceding case where B_{K} is consistent with B₁ (that is, k = 1), the reported CSI may include only the RSRP of B_{K} and does not include the index of B_{K}, indicating that B₁ is the optimal reference signal with the largest received power. In the preceding case where B_{K} is inconsistent with B₁ (that is, *k* ∈ {1,2,...,*K*}, *k* ≠ 1), the reported CSI may include the index of B_{K} and the RSRP of B_{K}. When the RSRP is obtained by measuring the SSBs, the index of the optimal reference signal is the index of the optimal SSB. When the RSRP is obtained by measuring the CSI-RSs, the index of the optimal reference signal is the CRI. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the random access is non-initial random access. The indication information is the RAR message used for indicating that the terminal reports the CSI through msg3 of the first-type random access mechanism. The parameter of the reported CSI includes the index of the optimal SSB or the index of the optimal CSI-RS (the index of the optimal CSI-RS is also referred to as the CSI-RS resource indicator (CRI)) and further includes the RSRP of the optimal SSB or the RSRP of the optimal CSI-RS. Moreover, the RSRP is obtained by measuring the SSBs or the CSI-RSs.

In this embodiment, after receiving the downlink broadcast signal, the terminal searches in reference signal beams (SSB beams or CSI-RS beams) for a beam whose received power exceeds the preset threshold. It is supposed that a total of K reference signal beams (referred to as B₁, ..., B_{K}) exist and that the searched beam whose received power exceeds the preset threshold is B₁. In this case, the terminal sends msg1 in the uplink beam corresponding to B₁. Msgl includes the random access preamble. After receiving msg1, the service node sends the RAR message in the PDSCH. After receiving the RAR message, the terminal measures all the downlink SSB beams according to the indication of the RAR message, determines to receive the reference signal beam (referred to as B_{K}) with the largest received power, and reports the CSI through sending msg3 to the service node. Whether B_{K} is consistent with B₁ or not, the parameter of the reported CSI includes the index of the optimal reference signal and the RSRP of the optimal reference signal. When the RSRP is obtained by measuring the SSBs, the index of the optimal reference signal is the index of the optimal SSB. When the RSRP is obtained by measuring the CSI-RSs, the index of the optimal reference signal is the CRI. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the random access is non-initial random access. The indication information is the RAR message used for indicating that the terminal reports the CSI through msg3 of the first-type random access mechanism. The parameter of the reported CSI includes the RSRP of the optimal SSB or the RSRP of the optimal CSI-RS and may further include the index of the optimal SSB or the index of the optimal CSI-RS (the index of the optimal CSI-RS is also referred to as the CSI-RS resource indicator (CRI)). Moreover, the RSRP is obtained by measuring the SSBs or the CSI-RSs.

In this embodiment, after receiving the downlink broadcast signal, the terminal searches in reference signal beams (SSB beams or CSI-RS beams) for a beam whose received power exceeds the preset threshold. It is supposed that a total of K downlink SSB beams (referred to as B₁, ..., B_{K}) exist and that the searched beam whose received power exceeds the preset threshold is B₁. In this case, the terminal sends msg1 in the uplink beam corresponding to B₁. Msgl includes the random access preamble. After receiving msg1, the service node sends the RAR message in the PDSCH. After receiving the RAR message, the terminal measures all the downlink SSB beams according to the indication of the RAR message, determines to receive the reference signal beam (referred to as B_{K}) with the largest received power, and reports the CSI through sending msg3 to the service node. In the preceding case where B_{K} is consistent with B₁ (that is, k = 1), the reported CSI may include only the RSRP of B_{K} and does not include the index of B_{K}, indicating that B₁ is the optimal reference signal with the largest received power. In the preceding case where B_{K} is inconsistent with B₁ (that is, *k* ∈ {1,2,...,*K*},*k* ≠ 1), the reported CSI may include the index of B_{K} and the RSRP of B_{K}. When the RSRP is obtained by measuring the SSBs, the index of the optimal reference signal is the index of the optimal SSB. When the RSRP is obtained by measuring the CSI-RSs, the index of the optimal reference signal is the CRI. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the indication information is the downlink broadcast signal used for indicating that the terminal reports the CSI through msg3 of the first-type random access mechanism. The service node has one antenna port. The parameter of the reported CSI includes the CQI of the optimal CSI-RS.

In this embodiment, after receiving the downlink broadcast signal, the terminal sends msg1 in the corresponding PRACH. Msgl includes the random access preamble. After receiving msg1 sent by the terminal, the service node sends the RAR message in the PDSCH. After receiving the RAR message, the terminal measures the CSI-RSs according to the indication of the broadcast signaling and reports the CSI through sending msg3 to the service node. The parameter of the reported CSI includes the CQI of the optimal CSI-RS. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the indication information is the downlink broadcast signal used for indicating that the terminal reports the CSI through msg3 of the first-type random access mechanism. The service node has more than one antenna port. The parameter of the reported CSI includes the CQI of the optimal CSI-RS, the CRI of the optimal CSI-RS, the RI of the optimal CSI-RS, and the PMI of the optimal CSI-RS.

In this embodiment, after receiving the downlink broadcast signal, the terminal sends msg1 in the corresponding PRACH. Msgl includes the random access preamble. After receiving msg1 sent by the terminal, the service node sends the RAR message in the PDSCH. After receiving the RAR message, the terminal measures the CSI-RSs according to the indication of the broadcast signaling and reports the CSI through sending msg3 to the service node. The parameter of the reported CSI includes the CQI of the optimal CSI-RS, the CRI of the optimal CSI-RS, the RI of the optimal CSI-RS, and the PMI of the optimal CSI-RS. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the indication information is the RAR message used for indicating that the terminal reports the CSI through msg3 of the first-type random access mechanism. The service node has one antenna port. The parameter of the reported CSI includes the CQI of the optimal CSI-RS.

In this embodiment, after receiving the downlink broadcast signal, the terminal sends msg1 in the corresponding PRACH. Msgl includes the random access preamble. After receiving msg1 sent by the terminal, the service node sends the RAR message in the PDSCH. After receiving the RAR message, the terminal measures the CSI-RSs according to the indication of the RAR message and reports the CSI through sending msg3 to the service node. The parameter of the reported CSI includes the CQI of the optimal CSI-RS, the CRI of the optimal CSI-RS, the RI of the optimal CSI-RS, and the PMI of the optimal CSI-RS. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the indication information is the RAR message used for indicating that the terminal reports the CSI through msg3 of the first-type random access mechanism. The service node has more than one antenna port. The parameter of the reported CSI includes the CQI of the optimal CSI-RS, the CRI of the optimal CSI-RS, the RI of the optimal CSI-RS, and the PMI of the optimal CSI-RS.

In this embodiment, after receiving the downlink broadcast signal, the terminal sends msg1 in the corresponding PRACH. Msgl includes the random access preamble. After receiving msg1 sent by the terminal, the service node sends the RAR message in the PDSCH. After receiving the RAR message, the terminal measures the CSI-RSs according to the indication of the RAR message and reports the CSI through sending msg3 to the service node. The parameter of the reported CSI includes the CQI of the optimal CSI-RS, the CRI of the optimal CSI-RS, the RI of the optimal CSI-RS, and the PMI of the optimal CSI-RS. After receiving msg3, the service node makes a decision based on the CSI reported by the terminal and sends the contention resolution message msg4. After the terminal receives msg4, the contention succeeds when the terminal ID included in msg4 is consistent with the ID of the terminal sending msg3; in this case, the terminal establishes a connection with the service node, and the random access process ends. When the terminal ID included in msg4 is inconsistent with the ID of the terminal sending msg3, the contention fails and the random access is reinitiated.

For example, in an embodiment, the indication information is the downlink broadcast signal used for indicating that the terminal reports the CSI through msgA of the second-type random access mechanism. The parameter of the reported CSI includes the RSRP of the optimal reference signal and the index of the optimal reference signal. When the random access is initial random access, the RSRP can be obtained only by measuring the SSBs. When the random access is non-initial random access, the RSRP can be obtained by measuring the SSBs or the CSI-RSs.

In this embodiment, after receiving the downlink broadcast signal, the terminal measures the received power of all the reference signals according to the indication of the downlink broadcast signal and selects the beam (which may not be the beam with the largest received power) corresponding to the earliest RACH occasion (RO) among beams whose received power exceeds the threshold value. It is supposed that the beam is B₁ (and that a total of K beams (referred to as B₁, ..., B_{K}) exist). MsgA is sent in the uplink beam corresponding to B₁. MsgA includes the random access preamble and the CSI. Whether the beam with the largest received power is B₁ or not, the parameter of the reported CSI includes the RSRP of the optimal reference signal and the index of the optimal reference signal. When the RSRP is obtained by measuring the SSBs, the index of the optimal reference signal is the index of the optimal SSB. When the RSRP is obtained by measuring the CSI-RSs, the index of the optimal reference signal is the CRI. After receiving msgA, the service node makes a decision based on the CSI reported by the terminal and sends msgB. MsgB includes the contention resolution message and the RAR message. After the terminal receives msgB, the contention succeeds when the terminal ID included in msgB is consistent with the ID of the terminal sending msgA; in this case, the terminal establishes a connection with the service node, and the random access process ends. When the terminal ID included in msgB is inconsistent with the ID of the terminal sending msgA, the contention fails and the random access is reinitiated.

In an embodiment, in the case where the beam with the largest received power is consistent with B₁, the parameter of the reported CSI may include or not include the index of the optimal reference signal.

For example, in an embodiment, the indication information is the downlink broadcast signal used for indicating that the terminal reports the CSI through msgA of the second-type random access mechanism. The service node has one antenna port. The parameter of the reported CSI includes the CQI of the optimal reference signal. When the random access is initial random access, the RSRP can be obtained only by measuring the SSBs. When the random access is non-initial random access, the RSRP can be obtained by measuring the SSBs or the CSI-RSs.

In this embodiment, after receiving the downlink broadcast signal, the terminal measures the received power of all the reference signals according to the indication of the downlink broadcast signal and selects the beam (which may not be the beam with the largest received power) corresponding to the earliest RACH occasion among beams whose received power exceeds the threshold value. It is supposed that the beam is B₁ (and that a total of K beams (referred to as B₁, ..., B_{K}) exist). MsgA is sent in the uplink beam corresponding to B_{1.} MsgA includes the random access preamble and the CSI. The parameter of the reported CSI includes the CQI of the optimal reference signal. After receiving msgA, the service node makes a decision based on the CSI reported by the terminal and sends msgB. MsgB includes the contention resolution message and the RAR message. After the terminal receives msgB, the contention succeeds when the terminal ID included in msgB is consistent with the ID of the terminal sending msgA; in this case, the terminal establishes a connection with the service node, and the random access process ends. When the terminal ID included in msgB is inconsistent with the ID of the terminal sending msgA, the contention fails and the random access is reinitiated.

For example, in an embodiment, the indication information is the downlink broadcast signal used for indicating that the terminal reports the CSI through msgA of the second-type random access mechanism. The service node has more than one antenna port. The parameter of the reported CSI includes the CRI of the optimal reference signal, the RI of the optimal reference signal, the PMI of the optimal reference signal, and the CQI of the optimal reference signal. When the random access is initial random access, the RSRP can be obtained only by measuring the SSBs. When the random access is non-initial random access, the RSRP can be obtained by measuring the SSBs or the CSI-RSs.

In this embodiment, after receiving the downlink broadcast signal, the terminal measures the received power of all the reference signals according to the indication of the downlink broadcast signal and selects the beam (which may not be the beam with the largest received power) corresponding to the earliest RACH occasion among beams whose received power exceeds the threshold value. It is supposed that the beam is B₁ (and that a total of K beams (referred to as B₁, ..., B_{K}) exist). MsgA is sent in the uplink beam corresponding to B₁. MsgA includes the PRACH and the CSI. The parameter of the reported CSI includes the CRI of the optimal reference signal, the RI of the optimal reference signal, the PMI of the optimal reference signal, and the CQI of the optimal reference signal.

After receiving msgA, the service node makes a decision based on the CSI reported by the terminal and sends msgB. MsgB includes the contention resolution message and the RAR message. After the terminal receives msgB, the contention succeeds when the terminal ID included in msgB is consistent with the ID of the terminal sending msgA; in this case, the terminal establishes a connection with the service node, and the random access process ends. When the terminal ID included in msgB is inconsistent with the ID of the terminal sending msgA, the contention fails and the random access is reinitiated.

For example, in one embodiment, the indication information is a broadcast signal or RAR message used for indicating that the terminal reports the CSI through msg3 of the first-type random access mechanism. Moreover, the CSI is obtained by measuring reference signals of different cells (including the cell to which this base station belongs). The reported parameter includes the index of the cell and further includes at least one of the index of the optimal reference signal, the RSRP of the optimal reference signal, the CQI of the optimal reference signal, the RI of the optimal reference signal, or the PMI of the optimal reference signal.

In this embodiment, after receiving the downlink broadcast signal, the terminal sends msg1 in the corresponding PRACH. Msgl includes the random access preamble. After receiving msg1 sent by the terminal, the service node sends the RAR message in the PDSCH. After receiving the RAR message, the terminal measures the CSI-RSs according to the indication of the downlink broadcast message or the RAR message and reports the CSI through sending msg3 to the service node. The parameter of the reported CSI includes the index of the cell and further includes at least one of the index of the optimal reference signal, the RSRP of the optimal reference signal, the CQI of the optimal reference signal, the RI of the optimal reference signal, or the PMI of the optimal reference signal. After receiving msg3, the service node makes a decision based on the CSI reported by the terminal and sends the contention resolution message msg4. When the index of the cell in the CSI is consistent with the index of the current cell, the current service node (which is supposed to be base station 1) sends the contention resolution message. After the terminal receives msg4, the contention succeeds when the terminal ID included in msg4 is consistent with the ID of the terminal sending msg3; in this case, the terminal establishes a connection with base station 1, and the random access process ends. When the terminal ID included in msg4 is inconsistent with the ID of the terminal sending msg3, the contention fails and the random access is reinitiated. When the index of the cell (which is supposed to be base station 2) in the CSI is inconsistent with the index of the current cell, the current service node (which is supposed to be base station 1) sends the contention resolution message. After the terminal receives msg4, the contention succeeds when the terminal ID included in msg4 is consistent with the ID of the terminal sending msg3; in this case, the terminal establishes a connection with base station 1. When the terminal ID included in msg4 is inconsistent with the ID of the terminal sending msg3, the contention fails and the random access is reinitiated. After the terminal establishes a connection with base station 1, base station 1 sends a scheduling message to tell the terminal to monitor the signal sent by the service node (base station 2) corresponding to the index of the cell in the CSI. The configuration information of the scheduling message is consistent with the configuration information of the service node (base station 2) corresponding to the index of the cell in the CSI; that is, the terminal is to establish a connection with base station 2.

For example, in one embodiment, the indication information is the broadcast signal used for indicating that the terminal reports the CSI through msgA of the second-type random access mechanism. Moreover, the CSI is obtained by measuring reference signals of different cells (including the cell to which this base station belongs). The reported parameter includes the index of the cell and further includes at least one of the index of the optimal reference signal, the RSRP of the optimal reference signal, the CQI of the optimal reference signal, the RI of the optimal reference signal, or the PMI of the optimal reference signal.

In this embodiment, after receiving the downlink broadcast signal, the terminal measures the CSI-RSs according to the indication of the downlink broadcast message and reports the CSI through sending msgA to the service node. MsgA includes the random access preamble and the CSI. The parameter of the reported CSI includes the index of the cell and further includes at least one of the index of the optimal reference signal, the RSRP of the optimal reference signal, the CQI of the optimal reference signal, the RI of the optimal reference signal, or the PMI of the optimal reference signal. After receiving msgA, the service node makes a decision based on the CSI reported by the terminal and sends msgB. MsgB includes the contention resolution message and the RAR message. When the index of the cell in the CSI is consistent with the index of the current cell, the current service node (which is supposed to be base station 1) sends the contention resolution message. After the terminal receives msgB, the contention succeeds when the terminal ID included in msgB is consistent with the ID of the terminal sending msgB; in this case, the terminal establishes a connection with base station 1, and the random access process ends. When the terminal ID included in msgB is inconsistent with the ID of the terminal sending msgB, the contention fails and the random access is reinitiated. When the index of the cell (which is supposed to be base station 2) in the CSI is inconsistent with the index of the current cell, the current service node (which is supposed to be base station 1) sends the contention resolution message. After the terminal receives msgB, the contention succeeds when the terminal ID included in msgB is consistent with the ID of the terminal sending msgB; in this case, the terminal establishes a connection with base station 1, and the random access process ends. When the terminal ID included in msgB is inconsistent with the ID of the terminal sending msgB, the contention fails and the random access is reinitiated. After the terminal establishes a connection with base station 1, the terminal sends a scheduling message to tell the terminal to monitor the signal sent by the base station (base station 2) corresponding to the index of the cell in the CSI. The configuration information of the scheduling message is consistent with the configuration information of the base station (base station 2) corresponding to the index of the cell in the CSI; that is, the terminal is to establish a connection with base station 2.

For the information reporting method of this embodiment, the CSI reporting mechanism is introduced for random access. The terminal reports the CSI to the service node. According to the CSI reported by the terminal, the service node can, for example, select the optimal access terminal among terminals in contention or determine a modulation manner, thus better adapting to a change in wireless channels and improving the performance of random access.

FIG. 4 is a flowchart of an information receiving method according to an embodiment. The method is applied to a service node. As shown in FIG. 4, the method provided in this embodiment includes 210 and 220.

In S210, indication information under a random access mechanism is sent.

In S220, the channel state information reported by a terminal according to the indication information is received.

In an embodiment, the indication information is used for indicating that the terminal reports the channel state information through a third message of a first-type random access mechanism. Alternatively, the indication information is used for indicating that the terminal reports the channel state information through an A-type message of a second-type random access mechanism.

In an embodiment, in the case of the first-type random access mechanism, the indication information is a random access response (RAR) message or a downlink broadcast message. In the case of the second-type random access mechanism, the indication information is the downlink broadcast message.

In an embodiment, the indication information includes at least one of the first indication information used for indicating a parameter included in the channel state information reported by the terminal, the second indication information used for indicating reference signals to be measured when the terminal calculates the channel state information, and the third indication information used for indicating that the terminal performs a reporting operation for the channel state information. The reporting operation includes to report and not to report.

In an embodiment, in the case where the indication information does not include the second indication information and in the case of the first-type random access mechanism, the reference signals to be measured when the terminal calculates the channel state information are reference signals corresponding to a resource occupied by the first message of the first-type random access mechanism. Alternatively, in the case where the indication information does not include the second indication information and in the case of the second-type random access mechanism, the reference signals to be measured when the terminal calculates the channel state information are reference signals corresponding to resources occupied by the A-type message of the second-type random access mechanism. The reference signals include at least one of synchronization signal/physical broadcast channel blocks (SSBs) or channel state information reference signals (CSI-RSs).

In an embodiment, the channel state information is obtained by measuring the reference signals. The reference signals include at least one of the SSBs or the CSI-RSs.

In an embodiment, the parameter of the channel state information includes at least one of the index of the optimal reference signal, the RSRP of the optimal reference signal, the CQI of the optimal reference signal, the RI of the optimal reference signal, or the PMI of the optimal reference signal.

In an embodiment, the parameter of the channel state information includes the index of the optimal reference signal. Alternatively, in the case where the index of the optimal reference signal is consistent with the index of a reference signal corresponding to a resource that is occupied by the first message of the first-type random access mechanism or the A-type message of the second-type random access mechanism, the parameter of the channel state information does not include the index of the optimal reference signal, where the reference signal corresponding to the resource is used for transmitting the first message of the first-type random access mechanism or the A-type message of the second-type random access mechanism. In the case where the index of the optimal reference signal is inconsistent with the index of the reference signal corresponding to a resource that is occupied by the first message of the first-type random access mechanism or the A-type message of the second-type random access mechanism, the parameter of the channel state information includes the index of the optimal reference signal, where the reference signal corresponding to the resource is used for transmitting the first message of the first-type random access mechanism or the A-type message of the second-type random access mechanism.

In an embodiment, in the case of one reference signal antenna port, the parameter of the channel state information does not include the PMI or the RI. Alternatively, in the case of more than one reference signal antenna port, the parameter of the channel state information includes at least one of the index of the optimal reference signal, the reference signal received power (RSRP) of the optimal reference signal, the channel quality indicator (CQI) of the optimal reference signal, the rank indicator (RI) of the optimal reference signal, or the precoding matrix indicator (PMI) of the optimal reference signal.

In an embodiment, the optimal reference signal is the reference signal with the largest measurement power or the reference signal with the largest CQI.

In an embodiment, after receiving the channel state information reported by the terminal according to the indication information, the method further includes sending the contention resolution message generated according to the channel state information to the terminal and, in the case where the terminal ID in the contention resolution message is consistent with the ID of the terminal reporting the CSI, establishing a connection with the terminal.

For the information reporting receiving of this embodiment, the CSI reporting mechanism is introduced for random access. It indicates that the terminal reports the CSI to the service node. According to the received CSI, for example, the optimal access terminal is selected among terminals in contention or a modulation manner is determined, thus better adapting to a change in wireless channels and improving the performance of random access.

Embodiments of the present application further provide an information reporting apparatus. FIG. 5 is a diagram illustrating the structure of an information reporting apparatus according to an embodiment. As shown in FIG. 5, the information reporting apparatus includes an indication information receiving module 310 and a state information reporting module 320. The indication information receiving module 310 is configured to receive indication information under a random access mechanism. The state information reporting module 320 is configured to report channel state information according to the indication information.

For the information reporting apparatus of this embodiment, the CSI reporting mechanism is introduced for random access. The indication information is received through the indication information receiving module. The CSI is reported to the service node through the state information reporting module. According to the CSI reported by the terminal, the service node can, for example, select the optimal access terminal among terminals in contention or determine a modulation manner, thus better adapting to a change in wireless channels and improving the performance of random access.

In an embodiment, the indication information is used for indicating that the terminal reports the channel state information through a third message of a first-type random access mechanism. Alternatively, the indication information is used for indicating that the terminal reports the channel state information through an A-type message of a second-type random access mechanism.

In an embodiment, in the case of the first-type random access mechanism, the indication information is a random access response (RAR) message or a downlink broadcast message. In the case of the second-type random access mechanism, the indication information is the downlink broadcast message.

In an embodiment, the indication information includes at least one of the first indication information used for indicating a parameter included in the channel state information reported by the terminal, the second indication information used for indicating reference signals to be measured when the terminal calculates the channel state information, and the third indication information used for indicating a reporting operation performed by the terminal to the channel state information. The reporting operation includes to report and not to report.

In an embodiment, in the case where the indication information does not include the second indication information and in the case of the first-type random access mechanism, the reference signals to be measured when the terminal calculates the channel state information are reference signals corresponding to a resource occupied by the first message of the first-type random access mechanism. Alternatively, in the case where the indication information does not include the second indication information and in the case of the second-type random access mechanism, the reference signals to be measured when the terminal calculates the channel state information are reference signals corresponding to resources occupied by the A-type message of the second-type random access mechanism. The reference signals include at least one of SSBs or CSI-RSs.

In an embodiment, the channel state information is obtained by measuring the reference signals. The reference signals include at least one of the SSBs or the CSI-RSs.

In an embodiment, the parameter of the channel state information includes at least one of the index of the optimal reference signal, the RSRP of the optimal reference signal, the CQI of the optimal reference signal, the RI of the optimal reference signal, or the PMI of the optimal reference signal.

In an embodiment, the parameter of the channel state information includes the index of the optimal reference signal. Alternatively, in the case where the index of the optimal reference signal is consistent with the index of a reference signal corresponding to a resource that is occupied by the first message of the first-type random access mechanism or the A-type message of the second-type random access mechanism, the parameter of the channel state information does not include the index of the optimal reference signal, where the reference signal corresponding to the resource is used for transmitting the first message of the first-type random access mechanism or the A-type message of the second-type random access mechanism. In the case where the index of the optimal reference signal is inconsistent with the index of the reference signal corresponding to a resource that is occupied by the first message of the first-type random access mechanism or the A-type message of the second-type random access mechanism, the parameter of the channel state information includes the index of the optimal reference signal, where the reference signal corresponding to the resource is used for transmitting the first message of the first-type random access mechanism or the A-type message of the second-type random access mechanism.

In an embodiment, in the case of one reference signal antenna port, the parameter of the channel state information does not include the PMI or the RI. Alternatively, in the case of more than one reference signal antenna port, the parameter of the channel state information includes at least one of the index of the optimal reference signal, the reference signal received power (RSRP) of the optimal reference signal, the channel quality indicator (CQI) of the optimal reference signal, the rank indicator (RI) of the optimal reference signal, or the precoding matrix indicator (PMI) of the optimal reference signal.

In an embodiment, the optimal reference signal is the reference signal with the largest measurement power or the reference signal with the largest CQI.

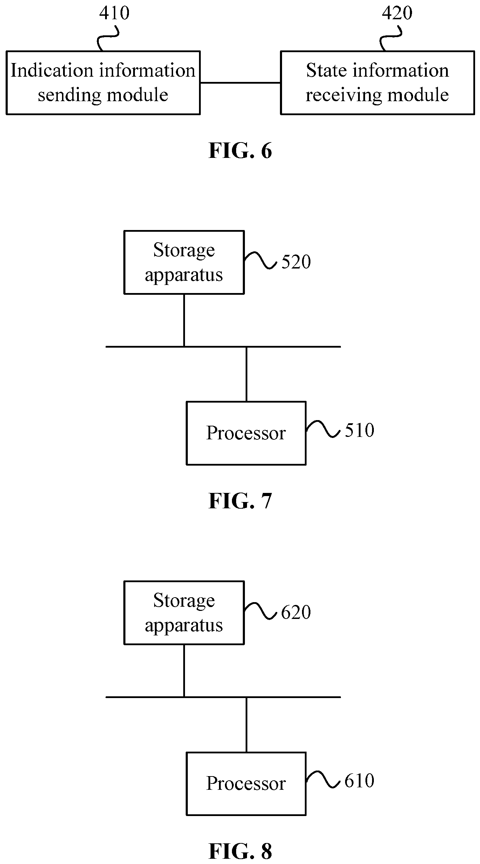

The information reporting apparatus provided in this embodiment and the information reporting method provided in the preceding embodiments belong to the same concept. For technical details not described in detail in this embodiment, reference may be made to any one of the preceding embodiments. Embodiments of the present application further provide an information receiving apparatus. FIG. 6 is a diagram illustrating the structure of an information receiving apparatus according to an embodiment. As shown in FIG. 6, the information reporting apparatus includes an indication information sending module 410 and a state information receiving module 420. The indication information sending module 410 is configured to receive indication information under a random access mechanism. The state information receiving module 420 is configured to report channel state information according to the indication information.

For the information receiving apparatus of this embodiment, the CSI reporting mechanism is introduced for random access. It indicates through the indication information sending module that the terminal reports the CSI. The CSI is received through the state information receiving module. Accordingly, according to the CSI reported by the terminal, for example, the optimal access terminal can be selected among terminals in contention or a modulation manner is determined, thus better adapting to a change in wireless channels and improving the performance of random access.

In an embodiment, the indication information is used for indicating that the terminal reports the channel state information through a third message of a first-type random access mechanism. Alternatively, the indication information is used for indicating that the terminal reports the channel state information through an A-type message of a second-type random access mechanism.

In an embodiment, in the case of the first-type random access mechanism, the indication information is a random access response (RAR) message or a downlink broadcast message. In the case of the second-type random access mechanism, the indication information is the downlink broadcast message.

In an embodiment, the indication information includes at least one of the first indication information used for indicating a parameter included in the channel state information reported by the terminal, the second indication information used for indicating reference signals to be measured when the terminal calculates the channel state information, and the third indication information used for indicating a reporting operation performed by the terminal to the channel state information. The reporting operation includes to report and not to report.

In an embodiment, in the case where the indication information does not include the second indication information and in the case of the first-type random access mechanism, the reference signals to be measured when the terminal calculates the channel state information are reference signals corresponding to a resource occupied by the first message of the first-type random access mechanism. Alternatively, in the case where the indication information does not include the second indication information and in the case of the second-type random access mechanism, the reference signals to be measured when the terminal calculates the channel state information are reference signals corresponding to resources occupied by the A-type message of the second-type random access mechanism. The reference signals include at least one of SSBs or CSI-RSs.

In an embodiment, the channel state information is obtained by measuring the reference signals. The reference signals include at least one of the SSBs or the CSI-RSs.

In an embodiment, the parameter of the channel state information includes at least one of the index of the optimal reference signal, the RSRP of the optimal reference signal, the CQI of the optimal reference signal, the RI of the optimal reference signal, or the PMI of the optimal reference signal.

In an embodiment, the parameter of the channel state information includes the index of the optimal reference signal. Alternatively, in the case where the index of the optimal reference signal is consistent with the index of a reference signal corresponding to a resource that is occupied by the first message of the first-type random access mechanism or the A-type message of the second-type random access mechanism, the parameter of the channel state information does not include the index of the optimal reference signal, where the reference signal corresponding to the resource is used for transmitting the first message of the first-type random access mechanism or the A-type message of the second-type random access mechanism. In the case where the index of the optimal reference signal is inconsistent with the index of the reference signal corresponding to a resource that is occupied by the first message of the first-type random access mechanism or the A-type message of the second-type random access mechanism, the parameter of the channel state information includes the index of the optimal reference signal, where the reference signal corresponding to the resource is used for transmitting the first message of the first-type random access mechanism or the A-type message of the second-type random access mechanism.

In an embodiment, in the case of one reference signal antenna port, the parameter of the channel state information does not include the PMI or the RI. Alternatively, in the case of more than one reference signal antenna port, the parameter of the channel state information includes at least one of the index of the optimal reference signal, the reference signal received power (RSRP) of the optimal reference signal, the channel quality indicator (CQI) of the optimal reference signal, the rank indicator (RI) of the optimal reference signal, or the precoding matrix indicator (PMI) of the optimal reference signal.

In an embodiment, the optimal reference signal is the reference signal with the largest measurement power or the reference signal with the largest CQI.

The information receiving apparatus provided in this embodiment and the information receiving method provided in the preceding embodiments belong to the same concept. For technical details not described in detail in this embodiment, reference may be made to any one of the preceding embodiments. Embodiments of the present application provide a terminal. The information reporting method may be performed by the information reporting apparatus which may be implemented by software and/or hardware and integrated into the terminal. The terminal is a user equipment reporting the channel state information.

FIG. 7 is a diagram illustrating the structure of a terminal according to an embodiment. As shown in FIG. 7, the terminal provided in this embodiment includes a processor 510 and a storage apparatus 520. The terminal may include one or more processors. One processor 510 is taken as an example in FIG. 7. The processor 510 and the storage apparatus 620 that are in the terminal may be connected via a bus or in other manners. The connection via the bus is taken as an example in FIG. 7.

One or more programs are executed by one or more processors 510 to cause the one or more processors to perform the information reporting method in any one of the preceding embodiments. The storage apparatus 520 in the terminal, as a computer-readable storage medium, may be configured to store one or more programs which may be software programs, computer-executable programs, and modules, such as program instructions/modules (for example, modules in the information reporting apparatus shown in FIG. 5, including an indication information receiving module 310 and a state information reporting module 320) corresponding to the information reporting method in embodiments of the present application. The one or more processors 510 execute the software programs, instructions and modules stored in the storage apparatus 520 to perform various function applications and data processing of the terminal, that is, to implement the information reporting method in the preceding method embodiments.

The storage apparatus 520 mainly includes a program storage region and a data storage region. The program storage region may store an operating system and an application program required by at least one function. The data storage region may store data (such as the indication information and channel state information in the preceding embodiments) created according to the use of the equipment. Additionally, the storage apparatus 520 may include a high-speed random-access memory and may further include a nonvolatile memory, for example, at least one magnetic disk memory, a flash memory, or another nonvolatile solid-state memory. In some examples, the storage apparatus 520 may further include memories located remotely relative to the one or more processors 510, and these remote memories may be connected to the terminal via a network. Examples of the preceding network include, but are not limited to, the Internet, an intranet, a local area network, a mobile communication network, and a combination thereof.

Moreover, when the one or more programs included in the terminal is executed by the one or more processors 510, the following operations are implemented: indication information under a random access mechanism is received, and channel state information is reported according to the indication information.

Embodiments of the present application further provide a service node. The information receiving method may be performed by the information receiving apparatus which may be implemented by software and/or hardware and integrated in the service node. The service node is a node receiving channel state information.

FIG. 8 is a diagram illustrating the structure of a service node according to an embodiment. As shown in FIG. 8, the service node provided in this embodiment includes a processor 610 and a storage apparatus 620. The service node may include one or more processors. One processor 610 is taken as an example in FIG. 8. The processor 610 and the storage device 820 that are in the device may be connected through a bus or in other manners. The connection through the bus is taken as an example in FIG. 8.

One or more programs are executed by one or more processors 610 to cause the one or more processors 610 to perform the information receiving method in any one of the preceding embodiments.

The storage apparatus 620 in the service node, as a computer-readable storage medium, may be configured to store one or more programs which may be software programs, computer-executable programs, and modules, such as program instructions/modules (for example, modules in the information receiving apparatus shown in FIG. 6, including an indication information sending module 410 and a state information receiving module 420) corresponding to the information reporting method in embodiments of the present application. The one or more processors 610 execute the software programs, instructions and modules stored in the storage apparatus 620 to perform various function applications and data processing of the service node, that is, to implement the information reporting method in the preceding method embodiments.

The storage apparatus 620 mainly includes a program storage region and a data storage region. The program storage region may store an operating system and an application program required by at least one function. The data storage region may store data (such as the indication information and channel state information in the preceding embodiments) created according to the use of the equipment. Additionally, the storage apparatus 620 may include a high-speed random-access memory and may further include a nonvolatile memory, for example, at least one magnetic disk memory, a flash memory, or another nonvolatile solid-state memory. In some examples, the storage apparatus 620 may further include memories that are remotely disposed with respect to the one or more processors 610. These remote memories may be connected to the service node through a network. Examples of the preceding network include, but are not limited to, the Internet, an intranet, a local area network, a mobile communication network, and a combination thereof.

Moreover, when the one or more programs included in the terminal is executed by the one or more processors 610, the following operations are implemented: indication information under a random access mechanism is sent, and the channel state information reported by a terminal according to the indication information is received.

The service node provided in this embodiment and the information reporting method provided in the preceding embodiments belong to the same concept. For technical details not described in detail in this embodiment, reference may be made to any one of the preceding embodiments. Embodiments of the present application further provide a storage medium including computer-executable instructions. When executed by a computer processor, the computer-executable instructions cause the computer processor to perform an information reporting method or an information receiving method.

From the preceding description of embodiments, it is to be understood by those skilled in the art that the present application may be implemented by software and general-purpose hardware or may be implemented by hardware. Based on this understanding, the technical solutions of the present application may be embodied in the form of a software product. The software product in a computer may be stored in a computer-readable storage medium such as a floppy disk, read-only memory (ROM), random-access memory (RAM), flash memory, hard disk, or optical disk in the computer and includes multiple instructions for enabling a computer device (which may be a personal computer, a server, or a network device) to perform the method in any embodiment of the present application.

The preceding are only exemplary embodiments of the present application and are not intended to limit the scope of the present application.

A block diagram of any logic flow among the drawings of the present application may represent program steps, may represent interconnected logic circuits, modules, and functions, or may represent a combination of program steps with logic circuits, modules, and functions. Computer programs may be stored in a memory. The memory may be in any type suitable for the local technical environment and may be implemented using any suitable data storage technology, for example, but not limited to, a read-only memory, a random-access memory, and an optical memory apparatus and system (a digital video disc (DVD) or a compact disc (CD)). The computer-readable medium may include a non-transitory storage medium. The data processor may be of any type appropriate for the local technical environment such as, but not limited to, a general purpose computer, a special purpose computer, a microprocessor, a digital signal processor (DSP), an application specific integrated circuit (ASIC), a field-programmable gate array (FPGA), and a processor based on a multi-core processor architecture.

## Claims

1. An information reporting method, applied to a terminal, comprising:
receiving indication information under a random access mechanism; and
reporting channel state information according to the indication information.

2. The method according to claim 1, wherein
the indication information is used for indicating that the terminal reports the channel state information through a third message of a first-type random access mechanism; or
the indication information is used for indicating that the terminal reports the channel state information through an A-type message of a second-type random access mechanism.

3. The method according to claim 2, wherein
in a case of the first-type random access mechanism, the indication information is a random access response, RAR, message or a downlink broadcast message; and
in a case of the second-type random access mechanism, the indication information is a downlink broadcast message.

4. The method according to claim 2, wherein the indication information comprises at least one of:
first indication information used for indicating a parameter comprised in the channel state information reported by the terminal;
second indication information used for indicating a reference signal to be measured for the terminal to calculate the channel state information; and
third indication information used for indicating a reporting operation performed by the terminal to the channel state information, wherein the reporting operation comprises to report and not to report.

5. The method according to claim 4, wherein
in a case where the indication information does not comprise the second indication information and is under the first-type random access mechanism, the reference signal to be measured for the terminal to calculate the channel state information is a reference signal corresponding to a resource occupied by a first message of the first-type random access mechanism; or
in a case where the indication information does not comprise the second indication information and is under the second-type random access mechanism, the reference signal to be measured for the terminal to calculate the channel state information is a reference signal corresponding to a resource occupied by the A-type message of the second-type random access mechanism;
wherein the reference signal comprises at least one of a synchronization signal/physical broadcast channel block, SSB, or a channel state information reference signal, CSI-RS.

6. The method according to claim 1, wherein the channel state information is obtained by measuring a reference signal, wherein the reference signal comprises at least one of an SSB or a CSI-RS.

7. The method according to claim 1, wherein
a parameter of the channel state information comprises at least one of a cell index, a subcarrier index, an index of an optimal reference signal, reference signal receiving power, RSRP, of an optimal reference signal, a channel quality indicator, CQI, of an optimal reference signal, a rank indicator, RI, of an optimal reference signal, or a precoding matrix indicator, PMI, of the optimal reference signal.

8. The method according to claim 7, wherein
the parameter of the channel state information comprises the index of the optimal reference signal;
or, in a case where the index of the optimal reference signal is consistent with an index of a reference signal corresponding to a resource that is occupied by a first message of a first-type random access mechanism or occupied by an A-type message of a second-type random access mechanism, the parameter of the channel state information does not comprise the index of the optimal reference signal, wherein the reference signal corresponding to the resource is used for transmitting the first message of the first-type random access mechanism or the A-type message of the second-type random access mechanism; and
in a case where the index of the optimal reference signal is inconsistent with the index of the reference signal corresponding to the resource that is occupied by the first message of the first-type random access mechanism or occupied by the A-type message of the second-type random access mechanism, the parameter of the channel state information comprises the index of the optimal reference signal, wherein the reference signal corresponding to the resource is used for transmitting the first message of the first-type random access mechanism or the A-type message of the second-type random access mechanism.

9. The method according to claim 7, wherein
in a case of one reference signal antenna port, the parameter of the channel state information does not comprise the PMI of the optimal reference signal or the RI of the optimal reference signal; or,
in a case of more than one reference signal antenna port, the parameter of the channel state information comprises at least one of the cell index, the subcarrier index, the index of the optimal reference signal, the RSRP of the optimal reference signal, the CQI of the optimal reference signal, the RI of the optimal reference signal, or the PMI of the optimal reference signal.

10. The method according to any one of claims 7 to 9, wherein the optimal reference signal is a reference signal with largest measurement power or a reference signal with a largest CQI.

11. An information receiving method, applied to a service node, comprising:
sending indication information under a random access mechanism; and
receiving channel state information reported by a terminal according to the indication information.

12. The method according to claim 11, wherein
the indication information is used for indicating that the terminal reports the channel state information through a third message of a first-type random access mechanism; or
the indication information is used for indicating that the terminal reports the channel state information through an A-type message of a second-type random access mechanism.

13. The method according to claim 12, wherein
in a case of the first-type random access mechanism, the indication information is a random access response, RAR, message or a downlink broadcast message; and
in a case of the second-type random access mechanism, the indication information is a downlink broadcast message.

14. The method according to claim 12, wherein
the indication information comprises at least one of:
first indication information used for indicating a parameter comprised in the channel state information reported by the terminal;
second indication information used for indicating a reference signal to be measured for the terminal to calculate the channel state information; and
third indication information used for indicating a reporting operation performed by the terminal to the channel state information, wherein the reporting operation comprises to report and not to report.

15. The method according to claim 14, wherein
in a case where the indication information does not comprise the second indication information and is under the first-type random access mechanism, the reference signal to be measured for the terminal to calculate the channel state information is a reference signal corresponding to a resource occupied by a first message of the first-type random access mechanism; or
in a case where the indication information does not comprise the second indication information and is under the second-type random access mechanism, the reference signal to be measured for the terminal to calculate the channel state information is a reference signal corresponding to a resource occupied by the A-type message of the second-type random access mechanism;
wherein the reference signal comprises at least one of a synchronization signal/physical broadcast channel block, SSB, or a channel state information reference signal, CSI-RS.

16. The method according to claim 11, wherein the channel state information is obtained by measuring a reference signal, wherein the reference signal comprises at least one of an SSB or a CSI-RS.

17. The method according to claim 11, wherein
a parameter of the channel state information comprises at least one of a cell index, a subcarrier index, an index of an optimal reference signal, reference signal receiving power, RSRP, of an optimal reference signal, a channel quality indicator, CQI, of an optimal reference signal, a rank indicator, RI, of an optimal reference signal, or a precoding matrix indicator, PMI, of the optimal reference signal.

18. The method according to claim 17, wherein
the parameter of the channel state information comprises the index of the optimal reference signal;
or, in a case where the index of the optimal reference signal is consistent with an index of a reference signal corresponding to a resource that is occupied by a first message of a first-type random access mechanism or occupied by an A-type message of a second-type random access mechanism, the parameter of the channel state information does not comprise the index of the optimal reference signal, wherein the reference signal corresponding to the resource is used for transmitting the first message of the first-type random access mechanism or the A-type message of the second-type random access mechanism; and
in a case where the index of the optimal reference signal is inconsistent with the index of the reference signal corresponding to the resource that is occupied by the first message of the first-type random access mechanism or occupied by the A-type message of the second-type random access mechanism, the parameter of the channel state information comprises the index of the optimal reference signal, wherein the reference signal corresponding to the resource is used for transmitting the first message of the first-type random access mechanism or the A-type message of the second-type random access mechanism ..

19. The method according to claim 17, wherein
in a case of one reference signal antenna port, the parameter of the channel state information does not comprise the PMI of the optimal reference signal or the RI of the optimal reference signal; or,
in a case of more than one reference signal antenna port, the parameter of the channel state information comprises at least one of the cell index, the subcarrier index, the index of the optimal reference signal, the RSRP of the optimal reference signal, the CQI of the optimal reference signal, the RI of the optimal reference signal, or the PMI of the optimal reference signal.

20. The method according to any one of claims 17 to 19, wherein the optimal reference signal is a reference signal with largest measurement power or a reference signal with a largest CQI.

21. An information reporting apparatus, comprising:
an indication information receiving module configured to receive indication information under a random access mechanism; and
a state information reporting module configured to report channel state information according to the indication information.

22. An information receiving apparatus, comprising:
an indication information sending module configured to send indication information under a random access mechanism; and
a state information receiving module configured to receive channel state information reported by a terminal according to the indication information.

23. A terminal, comprising:
at least one processor; and
a storage apparatus configured to store at least one program;
wherein when executed by the at least one processor, the at least one program causes the at least one processor to perform the information reporting method according to any one of claims 1 to 10.

24. A service node, comprising:
at least one processor; and
a storage apparatus configured to store at least one program;
wherein when executed by the at least one processor, the at least one program causes the at least one processor to perform the information receiving method according to any one of claims 11 to 20.

25. A computer-readable storage medium configured to store a computer program which, when executed by a processor, causes the processor to perform the information reporting method according to any one of claims 1 to 10 or the information receiving method according to any one of claims 11 to 20.
